# EUROPÄISCHE PATENTSCHRIFT

(11) **EP 1 398 179 B1**
(45) Veröffentlichungstag und Bekanntmachung des Hinweises auf die Patenterteilung: **26.08.2009**
(21) Anmeldenummer: 03014782.1
(22) Anmeldetag: 28.06.2003
(51) Int. Cl.: B60B 27/00, F16C 19/52, F16C 33/66

(54) **Radlagerung, insbesondere für Anhängerachsen**
Wheel bearing, especially for trailer axles
Palier de roue, en particulier pour essieux de remorque

(30) Priorität: 10.09.2002 DE 10242199
(43) Veröffentlichungstag der Anmeldung: 17.03.2004
(73) Patentinhaber: BPW Bergische Achsen KG, 51674 Wiehl (DE)
(72) Erfinder: Leidig, Hans-Josef, 51580 Reichshof (DE)
(74) Vertreter: Christophersen & Partner

(56) Entgegenhaltungen:
- EP-A- 0 407 719
- EP-A- 0 458 499
- EP-A- 1 103 389
- EP-A- 1 321 685
- WO-A-01/45993
- CA-A1- 2 200 647
- DE-A1- 4 239 828
- DE-A1- 10 155 310
- US-A1- 2002 097 040
- PATENT ABSTRACTS OF JAPAN Bd. 2003, Nr. 02, 5. Februar 2003 (2003-02-05) & JP 2002 295496 A (NSK LTD), 9. Oktober 2002 (2002-10-09)

## Beschreibung

Die Erfindung betrifft eine Radlagerung, insbesondere für Anhängerachsen, mit einer mittels eines vorderen und eines hinteren Wälzlagers drehbar auf einem Achsschenkel gelagerten Nabe zur Befestigung eines Rades und einer Bremsvorrichtung, und einem Mittel zur Temperaturerfassung.

Eine derartige Radlagerung ist beispielsweise aus der DE 101 55 310 A bekannt.

Für einen einwandfreien Betrieb der Radlagerung werden sowohl das vordere als auch das hintere Wälzlager durch eine vor der Montage der Radlagerung in das Innere der Radlagerung eingebrachte Fettfüllung geschmiert. Für eine Wartung der Radlagerung ist diese Fettfüllung in regelmäßigen Abständen zu überprüfen. Dies geschieht sowohl hinsichtlich der Konsistenz als auch der Menge des Fettes. Sollten sich hierbei Mängel ergeben, so ist entweder zusätzliches Schmierfett nachzugeben oder sogar im Austausch gänzlich zu ersetzen.

Bleibt eine Verringerung der Schmierfettmenge oder eine Verschlechterung der Schmierfettqualität unbemerkt, so kann dies in nachteiliger Weise zu einem erhöhten Verschleiß oder gar einem Festfahren der Lager führen, was im schlimmsten Fall zu einer völligen Zerstörung der Radlagerung führen kann.

Als in der Praxis besonders problematisch hat sich eine auf das Schmierfett erhöhte Temperatureinwirkung herausgestellt. Verursacht werden kann diese beispielsweise durch eine zu starke Erhitzung der an der Nabe temperaturübertragend angeordneten Bremsvorrichtung. Über die Nabe steht das innerhalb der Radlagerung vorgesehene Schmierfett nämlich in direkter Wärmeverbindung mit der an der Nabe angeordneten Bremsvorrichtung. Kommt es nun infolge verstärkter Bremsvorgänge, wie sie beispielsweise bei Bergabfahrten zu erwarten sind, zu einer starken Erhitzung der Bremsvorrichtung, so gibt die Bremsvorrichtung diese Wärme über die Nabe auf das innerhalb der Radlagerung vorgesehene Schmierfett ab. Infolge dieser Wärmeübertragung kommt es zu einer unerwünschten Temperaturerhöhung innerhalb des Schmierfettes. Wird hierbei eine kritische Temperatur überschritten, so scheidet sich das im Schmierfett befindliche Öl aus, was in nachteiliger Weise zu einer drastischen Verminderung der Qualität des Schmierfettes führt. Bleibt diese infolge einer Überhitzung bewirkte Qualitätsverminderung des Schmierfettes unbemerkt, so kann es in zum Teil überraschender Weise zu dem oben beschriebenen Effekt kommen, dass nämlich die Wälzlager trocken laufen, was in der Konsequenz zu einem Totalausfall der Radlagerung führen kann.

Von besonderer Problematik ist in diesem Zusammenhang, dass die durch die temperaturbedingte Ölausscheidung bewirkte Qualitätseinbuße des Schmierfetts visuell schwer feststellbar ist bzw. sehr spezielle Kenntnisse und besondere Messeinrichtungen voraussetzt. Mithin würde auch bei einer vorschriftsmäßig durchgeführten Wartung nicht auffallen, dass das in der Radlagerung eingesetzte Fett den auch bei einer bestimmungsgemäßen Verwendung der Radlagerung auftretenden Beanspruchungen nicht mehr standhalten kann und dringendst auszutauschen ist. Im Ergebnis kann sich so trotz einer gewissenhaft durchgeführten Überprüfung ein für die Radlagerung schadhaftes Trockenlaufen der Wälzlager einstellen.

Um die auf die Radlagerung einwirkenden Temperaturen sicher erfassen zu können, ist es aus der DE 101 55 310 A1 bekannt, elektrisch arbeitende Temperatursensoren im Bereich der Radlagerung vorzusehen, die über elektrische Verbindungskabel mit einem Temperaturdiagnosemittel in Verbindung stehen. Diese Art der Temperaturüberwachung hat sich aufgrund der elektrische Verkabelung und dem Erfordernis einer die Sensordaten auswertenden Diagnostik als aufwendig erwiesen.

Vom Vorbeschriebenen ausgehend ist es **Aufgabe** der Erfindung, eine Radlagerung bereitzustellen, bei der eine mögliche Überhitzung des innerhalb der Radlagerung vorgesehenen Schmierfettes auf einfache Weise festgestellt und frühzeitig erkannt werden kann.

Zur technischen **Lösung** der Aufgabe wird mit einer ersten Ausgestaltung der Erfindung eine Radlagerungder eingangs genannten Art vorgeschlagen, bei der das Mittel zur Temperaturerfassung ein sich bei Erreichen einer vorbestimmten Temperatur irreversibel verfärbendes, wärmeempfindliches Element ist.

Gemäß einer anderen Ausgestaltung der Erfindung wird eine Radlagerung der eingangs genannten Art vorgeschlagen, bei der das Mittel zur Temperaturerfassung ein Sensor ist, welcher elektrisch mit einem Anzeigegerät verbunden ist, das den maximal gemessenen Temperaturwert eingefroren ausweist.

Eine gemäß dieser technischen Lehre ausgestaltete Radlagerung weist den Vorteil auf, jederzeit eine Prüfung der Radlagerung insoweit vornehmen zu können, als dass auf einfache Weise festgestellt werden kann, welcher Temperaturbelastung die Radlagerung und damit auch das innerhalb der Radlagerung vorgesehene Schmierfett ausgesetzt waren. Hieraus können dann Rückschlüsse auf die Schmierfettqualität gezogen werden, so dass anhand der Temperaturerfassung bestimmt werden kann, ob es erforderlich ist, das in der Radlagerung vorgesehene Schmierfett auszutauschen oder nicht.

Herkömmliche Schmierfette weisen eine Temperaturresistenz bis ca. 170°C auf. Wird das Schmierfett hingegen auf eine höhere Temperatur erhitzt, so fällt das im Schmierfett gebundene Öl aus und es kommt zu der vorbeschriebenen Qualitätseinbuße.

Das Mittel zur Temperaturerfassung ist als sogenannter Thermopunkt ausgebildet. Hierbei handelt es sich um ein wärmeempfindliches Element, das direkt auf diejenige Stelle der Radlagerung aufgebracht wird, an der es die Temperatur zu erfassen gilt. Der Thermopunkt ist vorzugsweise kreisförmig in Form eines Punktes selbstklebend ausgebildet und weist eine vordefinierte Einfärbung auf. Kommt es nun zu einer Erwärmung der Radlagerung beispielsweise infolge einer Erhitzung der an der Nabe der Radlagerung angeordneten Bremsvorrichtung, so wirkt diese Erwärmung auch auf den Thermopunkt ein. Erreicht die Erwärmung einen vorbestimmbaren Wert, so kommt es infolge dieser Erwärmung zu einer dauerhaft beständigen Einfärbung, d.h. Umfärbung des Thermopunktes, die auch nach einer sich anschließenden Abkühlung beibehalten wird. Vorgesehen sein kann beispielsweise ein Thermopunkt, der in nicht aktiviertem Zustand, d.h. im noch nicht überhitzten Zustand, eine grüne Einfärbung aufweist. Kommt es zu einer Erwärmung, die beispielsweise einen Wert von 170°C übersteigt, so verfärbt sich der ursprünglich grüne Punkt schwarz. Bei einer Wartung der Radlagerung kann sodann mit einem nur flüchtigen Blick auf den Thermopunkt bereits erkannt werden, dass die Radlagerung einer solch starken Erhitzung ausgesetzt war, dass das innerhalb der Radlagerung angeordnete Schmierfett aller Wahrscheinlichkeit nach durch das Ausfällen bzw. Auslaufen von Öl starke Qualitätseinbußen aufweist und daher auszutauschen ist. In vorteilhafter Weise ermöglicht es so der Thermopunkt, eine Überhitzung des innerhalb der Radlagerung vorgesehenen Schmierstoffes auf einfache Weise festzustellen und frühzeitig zu erkennen. Folgeschäden der Radlagerung können somit vermieden werden.

Angeordnet sein kann das Mittel zur Temperaturerfassung an der Nabe, am Achsschenkel oder auch an einer den Achsschenkel umgebenden Hülse. Entscheidend bei der Anordnung des Mittels zur Temperaturerfassung ist allerdings, dass die vom Mittel zur Temperaturerfassung gemessene Temperatur einen Rückschluss auf die Temperatur zulässt, der das Schmierfett bisher ausgesetzt war.

So ist beispielsweise bei einem an der den Achsschenkel umgebenden Hülse angeordneten Mittel zur Temperaturerfassung zu beachten, dass die Hülse nicht direkt mit dem Schmierfett in Verbindung steht. In der Konsequenz bedeutet dies, dass die an der Hülse gemessene Temperatur infolge von Wärmeübertragungsverlusten niedriger sein kann, als die tatsächlich auf das Schmiermittel einwirkende Temperatur. Das Mittel zur Temperaturerfassung ist daher entsprechend einzustellen. Gleiches gilt beispielsweise auch für ein an der Nabe angeordnetes Mittel zur Temperaturerfassung. Auch hier ist die entsprechende Temperaturdifferenz zwischen dem Ort der Temperaturerfassung und dem Ort des temperaturtechnisch zu erfassenden Schmiermittels zu berücksichtigen.

Für einen möglichst genauen Rückschluss aus der an der Radlagerung erfassten Temperatur auf den Qualitätszustand des innerhalb der Radlagerung vorgesehenen Schmierfettes gilt es ferner, die jeweils verwendete Art des Schmiermittels zu berücksichtigen. So ergeben sich nämlich in Abhängigkeit der Zusammensetzung des Schmiermittels unterschiedliche Ausfalltemperaturen für das im Schmiermittel gebundene Öl. Und so ist in Abhängigkeit des verwendeten Schmiermittels ein entsprechendes Mittel zur Temperaturerfassung einzusetzen bzw. einzustellen.

Gemäß einer alternativen Ausgestaltungsform kann das Mittel zur Temperaturerfassung streifenförmig ausgebildet sein und Bereiche unterschiedlicher Wärmeempfindlichkeit aufweisen. Diese Bereiche unterschiedlicher Wärmeempfindlichkeit können zudem mit einer Temperaturskala versehen sein. Auf diese Weise wird es möglich, nicht nur feststellen zu können, dass eine Überhitzung stattgefunden hat, auch kann abgelesen werden, welche maximale Temperatur in etwa vorgeherrscht hat. Dies lässt in vorteilhafter Weise eine genauere Einschätzung des Qualitätszustandes des Schmierfettes zu. Vorgesehen sein kann beispielsweise eine Unterteilung in unterschiedliche Wärmeempfindlichkeitsbereiche, die einer Abstufung von jeweils 5°C entsprechen. Eine entsprechend an diese Temperaturempfindlichkeit angepasste Temperaturskala ermöglicht sodann ein Ablesen der auf die Radlagerung eingewirkten höchsten Temperatur mit einer Präzision von ±5°C.

Wenn gemäß der alternativen Ausgestaltungsform das Mittel zur Temperaturerfassung ein Sensor ist, ist dieser Sensor über eine elektrische Verbindung mit einem Anzeigegerät gekoppelt, das den maximal gemessenen Temperaturwert "eingefroren" ausweist, bis dieser wiederum überschritten wird. Der Vorteil dieser Ausgestaltung liegt darin, dass eine permanente Temperaturüberprüfung der Radlagerung möglich ist. Dies eröffnet in vorteilhafter Weise die Möglichkeit, eine sich unter Umständen anbahnende Überhitzung frühzeitig zu erkennen und entsprechende Maßnahmen zu ergreifen. Auf diese Weise kann sowohl die Lebensdauer der Radlagerung als auch die des innerhalb der Radlagerung angeordneten Schmierfettes verlängert werden. Nach dem Austausch des Fettes wird die Anzeige des Sensors "genullt" bzw. eventuell ein neuer Thermopunkt geklebt.

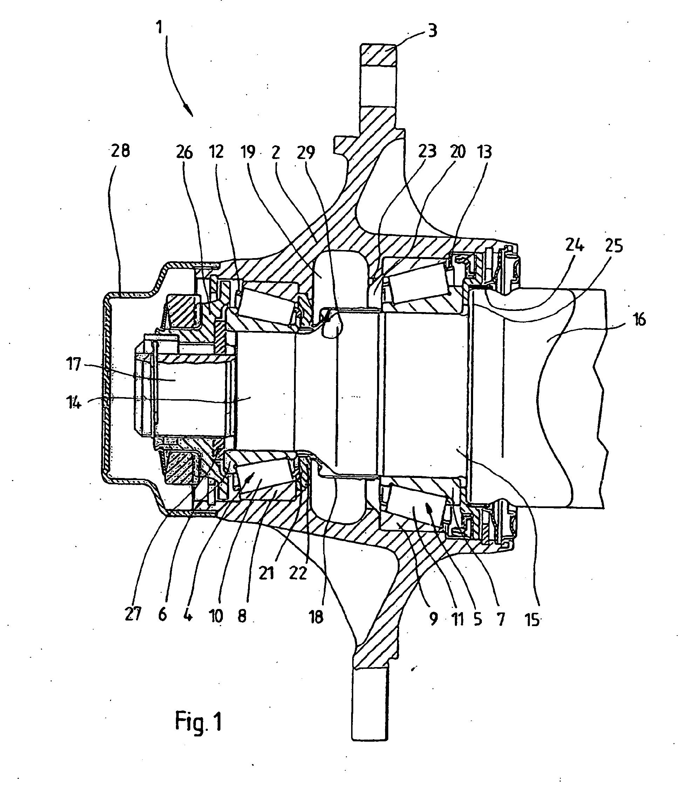

Weitere Vorteile und Merkmale der Erfindung ergeben sich aus der Beschreibung anhand der Figur 1. Diese zeigt in teilgeschnittener Seitenansicht eine mit einem erfindungsgemäßen Mittel zur Temperaturerfassung versehene Radlagerung.

Die in der Figur 1 gezeigte Radlagerung 1 umfasst eine Nabe 2, die mit einem Befestigungsflansch 3 für eine in der Zeichnung nicht dargestellte Bremsvorrichtung sowie für ein Rad versehen ist. Bei der Bremsvorrichtung kann es sich um eine Bremstrommel oder eine Bremsscheibe handeln.

Im Inneren der Nabe 2 sind zwei Wälzlager 4 und 5 angeordnet, die beim Ausführungsbeispiel als Kegelrollenlager mit unterschiedlichen Durchmessern ausgebildet sind. Das vordere Wälzlager 4 hat einen kleineren Durchmesser als das hintere Wälzlager 5. Beide Wälzlager 4 und 5 bestehen jeweils aus einem Innenring 6 bzw. 7, einem Außenring 8 bzw. 9 und Kegelrollen 10 bzw. 11, die jeweils durch einen Käfig 12 bzw. 13 gehalten sind.

Die Innenringe 6 und 7 der beiden Wälzlager 4 und 5 sitzen jeweils auf einem zylindrischen Lagersitz 14 bzw. 15 eines Achsschenkels 16, der an seinem vorderen Ende mit einem Außengewindeabschnitt 17 versehen ist.

Wie weiterhin aus der Figur 1 ersichtlich, ist zwischen dem vorderen Wälzlager 4 und dem hinteren Wälzlager 5 auf dem Achsschenkel 16 eine Hülse 18 angeordnet, um die Ringkammer 19 und die in Betriebszustand mit Schmierstoff gefüllten Schmierstoffräume 20 und 21, welche durch die Ablaufsicherung 22 und das Fettfangblech 23 gebildet werden, gegenüber dem Achsschenkel 16 abzudichten. Die Hülse 18 und die darauf jeweils radial stehenden Bleche 23 und 22 des Fettfangs und der Ablaufsicherung halten dabei das Schmierfett weitestgehend in den Schmierstoffräumen 20 und 21 im Bereich der Wälzlager 4 und 5.

Um die mit den Wälzlagern 4 und 5 versehenen Nabe 2 in axialer Richtung definiert auf dem Achsschenkel 16 zu positionieren, ist an dem Achsschenkel 16 eine Ringschulter 24 angeformt, die, wie aus der Figur 1 ersichtlich, eine radial verlaufende, ringförmige Anschlagsfläche 25 für den Innenring 7 des hinteren Wälzlagers 5 bildet.

Die Positionierung und Halterung der mit den beiden Wälzlagern 4 und 5 versehenen Naben 2 und dem Achsschenkel 16 geschieht bei dem dargestellten Ausführungsbeispiel mit Hilfe einer Achsmutter 26, die auf dem Außengewindeabschnitt 17 des Achsschenkels 16 aufgeschraubt wird. Bei dem Ausführungsbeispiel ist zwischen der Achsmutter 26 und dem Innenring 6 des vorderen Wälzlagers 4 eine Druckscheibe 27 angeordnet, die mit einer Nase in eine Nut im Außengewindeabschnitt 17 des Achsschenkels 16 hineinragt und auf diese Weise unverdrehbar und zugleich axial verschiebbar am Achsschenkel 16 gehalten wird. Das Innere der Nabe 2 wird durch eine Kappe 28 abgedeckt.

Zur Erfassung der Temperatur des in der Radlagerung 1 vorgesehenen Schmierfettes ist auf der Innenseite der Hülse 18 ein sogenannter Thermopunkt 29 angeordnet. Dieser Thermopunkt 29 ist zur Befestigung auf der Hülse 18 rückseitig mit einem Klebstoff versehen.

Der Thermopunkt 29 weist eine bestimmte Einfärbung, beispielsweise grün auf, die bei Erreichen einer vorbestimmten Temperatur umschlägt und sich in eine andersartige Farbe, beispielsweise schwarz, irreversibel umfärbt. Als Temperaturgrenze, bei der sich die Einfärbung ändert, kann beispielsweise ein Wert von 170°C vorgesehen sein. Je nach Anordnung des Thermopunktes bzw. je nach Zusammensetzung des in der Radlagerung 1 befindlichen Schmierfettes können aber auch andere Temperaturen gewählt werden, bei denen der Thermopunkt seine Einfärbung ändert. Entscheidend ist jedoch, daß der Thermopunkt in Relation zu der im Schmierfett herrschenden Temperatur dann eine Umfärbung erfährt, wenn die im Schmierfett kritische Temperatur erreicht ist, bei der das im Schmierfett gebundene Öl ausfällt. Auf diese Weise kann nämlich sichergestellt werden, daß ein bereits schon nur flüchtiger Blick auf den Thermopunkt ausreichend ist, um festzustellen, ob das in der Radlagerung vorgesehene Schmierfett einer über die Grenzen der Belastung hinaus kritischen Temperatur ausgesetzt war.

Gebildet sein kann der Thermopunkt 29 aus einem mehrschichtigen Komponentenwerkstoff, der im wesentlichen aus einem bei einer bestimmten Schmelztemperatur schmelzenden Stoff, dem sogenannten Schmelzstoff, und einer Trägerschicht für den Schmelzstoff besteht. Vorzugsweise ist die Trägerschicht aus schwarz eingefärbtem Papier gebildet, das bei noch nicht aktiviertem Zustand des Thermopunktes durch den Schmelzstoff vollständig abgedeckt ist. Der Schmelzstoff weist seinerseits eine vorgebbare Einfärbung auf, die beispielsweise weiß oder grün sein kann. Um den so ausgebildeten Thermopunkt vor äußeren Einflüssen zu schützen, kann als obere Schicht eine Abdeckfolie vorgesehen sein, die den Schmelzstoff schützend abdeckt. Kommt es nun zu einer über den vorbestimmbaren Schmelzpunkt des Schmelzstoffes hinausgehende Temperatureinwirkung auf das Thermoelement, so schmilzt der Schmelzstoff und gibt die ungehinderte Sicht auf die darunter liegende Trägerschicht, das beispielsweise schwarz eingefärbte Papier, frei. Dieser Vorgang ist irreversibel, das heißt nicht umkehrbar und bei einem schon nur flüchtigen Blick auf den Thermopunkt kann somit erkannt werden, ob dieser einer Überhitzung ausgesetzt war oder nicht.

Die Funktion des vorbeschriebenen Thermopunktes basiert auf dem rein physikalischen Prozeß des Schmelzens des Schmelzstoffes, bei dem für den jeweiligen Schmelzstoff charakteristischen Schmelzpunkt. Zusätzliche Randbedingungen, wie beispielsweise die Einwirkdauer der Temperatur, des Druckes oder der Alterung bei Langzeitanwendungen spielen hinsichtlich der Funktionsfähigkeit und Funktionsgenauigkeit des Thermopunktes keine Rolle, denn wirken sich derlei Randbedingungen anders als bei chemischen Reaktionen auf die durch den Schmelzpunkt gegebene Eigenschaft des Schmelzstoffes nicht aus.

Das vorbeschriebene Ausführungsbeispiel ist auf die Art der Ausgestaltung der Wälzlager, des Achsschenkels oder der zwischen den Wälzlagern ausgebildeten und den Achsschenkel umgebenden Hülse nicht beschränkt. Einzig entscheidend ist, daß das erfindungsgemäße Mittel zur Temperaturerfassung zur mittelbaren Qualitätskontrolle des in der Radlagerung vorgesehenen Schmierfettes herangezogen wird. Und so kann beispielsweise auch eine solche Radlagerung vorgesehen sein, bei der nicht ein vorderes und ein hinteres Wälzlager, sondern ein Kompaktlager vorgesehen ist, bei dem die Außenringe jeweils einstückig ausgebildet sind und die jeweiligen Innenringe nach einer Montage der Kegelrollenlager zusammengeclipst werden. Auch bei einer solchen Ausgestaltung der Wälzlager läßt sich selbstredend das erfindungsgemäße Mittel zur Temperaturerfassung einsetzen.

### Bezugszeichenliste

- 1: Radlagerung
- 2: Nabe
- 3: Befestigungsflansch
- 4: Wälzlager
- 5: Wälzlager
- 6: Innenring
- 7: Innenring
- 8: Außenring
- 9: Außenring
- 10: Kegelrolle
- 11: Kegelrolle
- 12: Käfig
- 13: Käfig
- 14: Lagersitz
- 15: Lagersitz
- 16: Achsschenkel
- 17: Außengewindeabschnitt
- 18: Hülse
- 19: Ringkammer
- 20: Schmierstoffraum
- 21: Schmierstoffraum
- 22: Ablaufsicherung
- 23: Fettfangblech
- 24: Ringschulter
- 25: Anschlagfläche
- 26: Achsmutter
- 27: Druckscheibe
- 28: Kappe
- 29: Thermopunkt

## Patentansprüche

1. Radlagerung, insbesondere für Anhängerachsen, mit einer mittels Wälzlagern (4, 5) drehbar auf einem Achsschenkel (16) gelagerten Nabe (2) zur Befestigung eines Rades und einer Bremsvorrichtung, und einem Mittel (29) zur Temperaturerfassung,
**dadurch gekennzeichnet,**
**dass** das Mittel (29) zur Temperaturerfassung ein sich bei Erreichen einer vorbestimmten Temperatur irreversibel verfärbendes, wärmeempfindliches Element ist.

2. Radlagerung, insbesondere für Anhängerachsen, mit einer mittels Wälzlagern (4, 5) drehbar auf einem Achsschenkel (16) gelagerten Nabe (2) zur Befestigung eines Rades und einer Bremsvorrichtung, und einem Mittel (29) zur Temperaturerfassung,
**dadurch gekennzeichnet,**
**dass** das Mittel (29) zur Temperaturerfassung ein Sensor ist, welcher elektrisch mit einem Anzeigegerät verbunden ist, das den maximal gemessenen Temperaturwert eingefroren ausweist.

3. Radlagerung nach Anspruch 2, **dadurch gekennzeichnet, dass** das Anzeigegerät die maximal gemessene Temperatur festhält.

4. Radlagerung nach Anspruch 1, **dadurch gekennzeichnet, dass** das Mittel (29) zur Temperaturerfassung die maximal erreichte Temperatur ausweist.

5. Radlagerung nach Anspruch 1 oder 2, **dadurch gekennzeichnet, dass** das Mittel (29) zur Temperaturerfassung von außen zugänglich an der Nabe (2) angeordnet ist.

6. Radlagerung nach Anspruch 1 oder 2, **dadurch gekennzeichnet, dass** das Mittel (29) zur Temperaturerfassung im Bereich zwischen dem vorderen und dem hinteren Wälzlager (4, 5) am Achsschenkel 16) oder an der Nabe (2) angeordnet ist.

7. Radlagerung nach Anspruch 1 oder 2, **dadurch gekennzeichnet, dass** das Mittel (29) zur Temperaturerfassung an einer den Achsschenkel (16) umgebenden Hülse (18) angeordnet ist.

8. Radlagerung nach Anspruch 7, **dadurch gekennzeichnet, dass** das Mittel (29) zur Temperaturerfassung in Bezug auf die Längserstreckung mittig auf der Innenseite der Hülse (18) angeordnet ist.

9. Radlagerung nach Anspruch 1 oder 2, **dadurch gekennzeichnet, dass** zwei Mittel (29) zur Temperaturerfassung vorgesehen sind, die auf der Innenseite einer den Achsschenkel (16) umgebenden Hülse (18) angeordnet sind, wobei das eine Mittel (29) nahe des einen Wälzlagers (4) und das andere Mittel (29) nahe des anderen Wälzlagers (5) angeordnet ist.

10. Radlagerung nach einem der Ansprüche 1, 4 bis 9, **dadurch gekennzeichnet, dass** das wärmeempfindliche Element auf einem Träger mit einer mit Klebstoff versehenen Rückseite angebracht ist.

11. Radlagerung nach einem der Ansprüche 1, 4 bis 10, **dadurch gekennzeichnet, dass** das wärmeempfindliche Element farbig oder durchsichtig ausgebildet ist und sich unter Wärmeeinfluss bei der vorbestimmten Temperatur in charakteristischer Weise verfärbt.

12. Radlagerung nach einem der Ansprüche 9 bis 11, **dadurch gekennzeichnet, dass** das wärmeempfindliche Element Bereiche mit unterschiedlichen Wärmeempfindlichkeiten aufweist.

13. Radlagerung nach einem der Ansprüche 9 bis 11, **dadurch gekennzeichnet, dass** mehrere wärmeempfindliche Elemente mit einer jeweils unterschiedlichen Wärmeempfindlichkeit auf einem gemeinsamen Träger aufgebracht sind.

14. Radlagerung nach einem der Ansprüche 10 bis 13, **dadurch gekennzeichnet, dass** der Träger mit einer Temperaturskala versehen ist.

15. Radlagerung nach einem der Ansprüche 10 oder 11, **dadurch gekennzeichnet, dass** der Träger kreisförmig ausgebildet ist und die Form eines Punktes aufweist und nur ein wärmeempfindliches Element beinhaltet.

16. Radlagerung nach einem der Ansprüche 10 bis 14, **dadurch gekennzeichnet, dass** der Träger streifenförmig ausgebildet ist.

## Claims

1. Wheel bearing, especially for trailer axles, with a hub (2), which is mounted rotatably on a stub axle (16) by means of rolling bearings (4, 5), for the securing of a wheel and a braking device, and with a temperature detection means (29), **characterized in that** the temperature detection means (29) is a heat-sensitive element which irreversibly changes colour when a predetermined temperature is reached.

2. Wheel bearing, especially for trailer axles, with a hub (2), which is mounted rotatably on a stub axle (16) by means of rolling bearings (4, 5), for the securing of a wheel and a braking device, and with a temperature detection means (29), **characterized in that** the temperature detection means (29) is a sensor which is electrically connected to a display device which freeze-frames the maximum measured temperature value.

3. Wheel bearing according to Claim 2, **characterized in that** the display device records the maximum measured temperature.

4. Wheel bearing according to Claim 1, **characterized in that** the temperature detection means (29) reveals the maximum temperature reached.

5. Wheel bearing according to Claim 1 or 2,
**characterized in that** the temperature detection means (29) is arranged on the hub (2) in a manner such that it is accessible from the outside.

6. Wheel bearing according to Claim 1 or 2,
**characterized in that** the temperature detection means (29) is arranged on the stub axle (16) or on the hub (2) in the region between the front and the rear rolling bearing (4, 5).

7. Wheel bearing according to Claim 1 or 2,
**characterized in that** the temperature detection means (29) is arranged on a sleeve (18) surrounding the stub axle (16).

8. Wheel bearing according to Claim 7, **characterized in that** the temperature detection means (29) is arranged centrally with respect to the longitudinal extent on the inside of the sleeve (18).

9. Wheel bearing according to Claim 1 or 2,
**characterized in that** two temperature detection means (29) are provided, said temperature detection means being arranged on the inside of a sleeve (18) surrounding the stub axle (16), with the one means (29) being arranged in the vicinity of the one rolling bearing (4) and the other means (29) being arranged in the vicinity of the other rolling bearing (5).

10. Wheel bearing according to one of Claims 1, 4 to 9, **characterized in that** the heat-sensitive element is attached to a support by a rear side provided with adhesive.

11. Wheel bearing according to one of Claims 1, 4 to 10, **characterized in that** the heat-sensitive element is of coloured or transparent design and, under the influence of heat, changes colour in a characteristic manner at the predetermined temperature.

12. Wheel bearing according to one of Claims 9 to 11, **characterized in that** the heat-sensitive element has regions having different heat sensitivities.

13. Wheel bearing according to one of Claims 9 to 11, **characterized in that** a plurality of heat-sensitive elements each having different heat sensitivity are attached to a common support.

14. Wheel bearing according to one of Claims 10 to 13, **characterized in that** the support is provided with a temperature scale.

15. Wheel bearing according to either of Claims 10 and 11, **characterized in that** the support is of circular design and is in the form of a point and contains only one heat-sensitive element.

16. Wheel bearing according to one of Claims 10 to 14, **characterized in that** the support is of strip-shaped design.

## Revendications

1. Palier de roue, notamment pour axes de remorques, avec un moyeu (2) monté à rotation sur une fusée (16) au moyen de roulements (4, 5), pour fixer une roue et un dispositif de freinage, et un moyen (29) de détection de température,
**caractérisé en ce que**
le moyen (29) de détection de température est un élément thermosensible qui se colore de façon irréversible lorsqu'une température prédéterminée est atteinte.

2. Palier de roue, notamment pour axes de remorques, avec un moyeu (2) monté à rotation sur une fusée (16) au moyen de roulements (4, 5), pour fixer une roue et un dispositif de freinage, et un moyen (29) de détection de température,
**caractérisé en ce que**
le moyen (29) de détection de température est un capteur relié électriquement à un qui affiche la valeur maximale de température mesurée bloquée.

3. Palier de roue selon la revendication 2, **caractérisé en ce que** l'appareil d'affichage retient la température maximale mesurée.

4. Palier de roue selon la revendication 1, **caractérisé en ce que** le moyen (29) de détection de température présente la température maximale atteinte.

5. Palier de roue selon la revendication 1, **caractérisé en ce que** le moyen (29) de détection de température est disposé sur le moyeu (2) de façon qu'on puisse y accéder de l'extérieur.

6. Palier de roue selon la revendication 1 ou 2, **caractérisé en ce que** le moyen (29) de détection de température est disposé dans la zone située entre le roulement avant et le roulement arrière (4, 5) sur la fusée (16) ou sur le moyeu (2).

7. Palier de roue selon la revendication 1 ou 2, **caractérisé en ce que** le moyen (29) de détection de température est disposé sur un manchon (18) entourant la fusée (16).

8. Palier de roue selon la revendication 7, **caractérisé en ce que** le moyen (29) de détection de température est disposé au centre à l'intérieur du manchon (18) par rapport à l'extension longitudinale.

9. Palier de roue selon la revendication 1 ou 2, **caractérisé en ce que** deux moyens (29) de détection de température sont prévus qui sont disposés à l'intérieur d'un manchon (18) entourant la fusée (16), l'un des moyens (29) étant disposé près de l'un des roulements et l'autre moyen (29) près de l'autre roulement (5).

10. Palier de roue selon l'une des revendications 1, 4 à 9, **caractérisé en ce que** l'élément thermosensible est disposé sur un support avec la face arrière recouverte de colle.

11. Palier de roue selon l'une des revendications 1, 4 à 10, **caractérisé en ce que** l'élément thermosensible est produit en couleur ou transparent et des colore de façon caractéristique sous l'effet de la chaleur à une température prédéterminée.

12. Palier de roue selon l'une des revendications 9 à 11, **caractérisé en ce que** l'élément thermosensible présente des zones avec différentes sensibilités à la température.

13. Palier de roue selon l'une des revendications 9 à 11, **caractérisé en ce que** plusieurs éléments thermosensibles avec des différentes sensibilités à la température sont disposés sur un support commun.

14. Palier de roue selon l'une des revendications 10 à 13, **caractérisé en ce que** le support est pourvu d'une échelle de température.

15. Palier de roue selon l'une des revendications 10 ou 11, **caractérisé en ce que** le support est de forme circulaire, présente la forme d'un point et ne contient qu'un seul élément thermosensible.

16. Palier de roue selon l'une des revendications 10 à 14, **caractérisé en ce que** le support est en forme de bandes.
